# EUROPEAN PATENT SPECIFICATION

(11) **EP 3 211 282 B1**
(45) Date of publication and mention of the grant of the patent: **22.08.2018**
(21) Application number: 16000467.7
(22) Date of filing: 26.02.2016
(51) Int. Cl.: F16L 27/04, F16L 37/52

(54) **A CONNECTING MECHANISM OF A FLEXIBLE PIPE AND AN OUTLET DEVICE**
VERBINDUNGSMECHANISMUS FÜR EINEN FLEXIBLEN SCHLAUCH UND AUSTRITTSVORRICHTUNG
MÉCANISME DE RACCORDEMENT D'UN TUYAU SOUPLE ET DISPOSITIF DE SORTIE

(43) Date of publication of application: 30.08.2017
(73) Proprietor: Xiamen Solex High-Tech Industries Co., Ltd., Xiamen Area of China (Fujian) Pilot Free Trade Zone (CN)
(72) Inventor: Zhou, Quanbing, 361000 Fujian (CN); Chen, Wenxiang, 361000 Fujian (CN); Fu, Feng, 361000 Fujian (CN)
(74) Representative: Verscht, Thomas Kurt Albert

(56) References cited:
- EP-B1- 2 582 889
- US-A1- 2007 046 023

## Description

### Field of the invention

The present invention relates to a connecting mechanism, connecting a flexible pipe to an outlet device.

### Background of the invention

Existing connecting mechanism of a flexible pipe and an outlet device, for example, CN102947517B and EP2582889, disclosed is a hand spraying component, which has a hand sprayer, the hand sprayer is connected to the flexible pipe by a connecting device, the connecting device of the hand sprayer and the flexible pipe comprises a flexible joint with ball joint, the ball joint has a first movable joint and a second movable joint that are pivoted to each other with a liquid passage connected together, the second movable joint has flexible inner joint and the first movable joint is configured with internal thread or external thread, the spherical shaped or spherical segment shaped side end portion at the wall of the first movable joint can be kept in offset way between the movable joint pit of the second movable joint, being the first aspect, and the movable joint head of the keeping element in the internal chamber of the first movable joint, being the other aspect, therein, the keeping element has the connecting bar in the second movable joint passing through the inserting hole of the first movable joint, the keeping element has the liquid passage of the first movable joint connected to the liquid passage of the second movable joint, and the movable joint head of the keeping element has spherical segment shape outer contour, an annular groove is configured at the largest external periphery area of the spherical segment shape movable joint head of the keeping element or the largest internal periphery area of the spherical shape or spherical segment shape side end portion of the first movable joint, and an annular sealing element is disposed in the annular groove.

In the existing mechanism, the first movable joint wall is disposed with a spherical shape or spherical segment shape end side portion, the movable joint head of the keeping element has a spherical shape outer contour, the second movable joint is disposed with movable joint pit coupling to the first movable joint, the first movable joint is kept in offset way between the second movable joint and the movable joint head, the first movable joint is positioned by the second movable joint and the movable joint head. On one hand, the structure is complicated, and it requires high to the parts precision, so that it costs high, on the other hand, it is inconvenient to assemble, it may fall off during connecting.

### Summary of the invention

The present invention provides a connecting mechanism, connecting a flexible pipe to an outlet device, as defined in claim 1 and which overcomes the disadvantages of the existing connecting mechanism. Preferred embodiments of the connecting mechanism are defined in claims 2-10. Compared to the existing known technology, the technical proposal of the present invention has advantages as follows:
The ball joint and the pipe fixing seat are coupled to realize a universal connection, the structure is simple and it has fewer parts, besides, it requires low manufacturing precision that reduces the manufacturing cost; the end portion of the pipe fixing seat can be elastically deformed that the ball joint can be assembled to the assembly groove, the anti-off portion is used to connect the ball joint and the pipe fixing seat, the self-lock surface surrounds the end portion of the pipe fixing seat to limit the deformation of the end of the pipe fixing seat to realize anti-off and self-lock, it avoids the ball joint from falling off from the pipe fixing seat, thus ensuring the ball joint and the pipe fixing seat connecting, the assembly is quick and convenient.

The preferred embodiments of the invention have the following advantages:
The end portion of the pipe fixing seat is disposed with cut slots so that it forms a plurality of suspending sheets peripherally arranged with space with the anti-off portion, so that it is convenient to assemble the ball joint to the groove.

The self-lock surface is a conical surface or a segment surface with a smaller diameter opening and a larger diameter inner concavity, the ball joint is located in the chamber defined by the self-lock surface, thus making sure that the self-lock surface can couple to the end portion of the pipe fixing seat when rotating universally and limiting the deformation of the end portion of the pipe fixing seat.

The joint comprises a base, which is contacted with the end face of a protruding ring, the ball joint passes through the protruding ring and inserts into the space defined by the self-lock surface, by the connecting of the ball joint and the pipe fixing seat and the base contacted with the end face of the protruding ring, the outlet fixing seat is connected to the pipe fixing seat, the structure is simple.

The outlet device is fixedly connected in the assembly through hole, and the base is disposed fixedly between the outlet device and the protruding ring, on one hand, the outlet device is fixedly connected to the outlet fixing seat, on the other hand, the joint can be connected to the outlet fixing seat, it enhances the connecting of the outlet fixing seat and the pipe fixing seat, and it is also assembled with convenience.

The external periphery surface of the end portion of the pipe fixing seat is disposed with a protrusion, with the cooperation of the protrusion and the self-lock surface, it achieves anti-off and self-lock, on one hand, it reduces the friction force that makes it convenient to rotate, on the other hand, it makes the self-lock surface capable of coupling to the end portion of the pipe fixing seat.

The groove wall of the assembly groove comprises a ball-shaped wall and a cylindrical wall, the sealing ring is disposed between the outer wall of the ball joint, the cylindrical wall and the annular surface, the assembly groove has simple structure that it is convenient to manufacture and assemble, the sealing ring is positioned stably.

### Brief description of the drawings

The present invention will be further described with the drawings and the embodiments.
FIG.1 illustrates a schematic diagram of the connecting mechanism of the present invention.
FIG.2 illustrates a sectional diagram of the connecting mechanism of the first embodiment in resting state.
FIG.3 illustrates a sectional diagram of the connecting mechanism of the first embodiment in swinging state.
FIG.4 illustrates a schematic diagram of the connecting mechanism of the first embodiment.
FIG.5 illustrates a sectional diagram of the connecting mechanism of the second embodiment.

### Detailed description of the embodiments

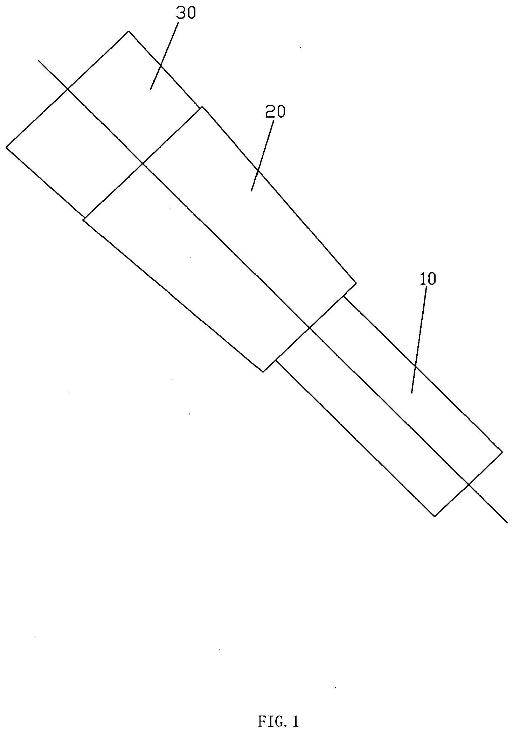

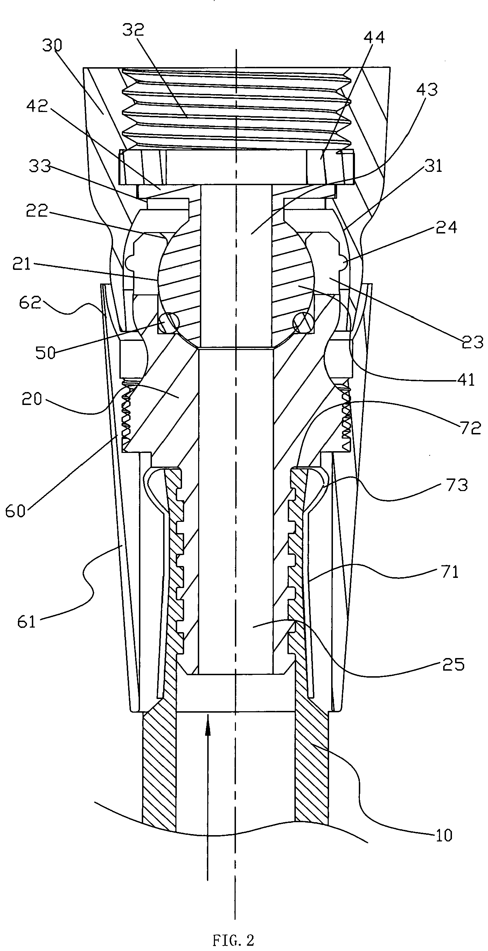

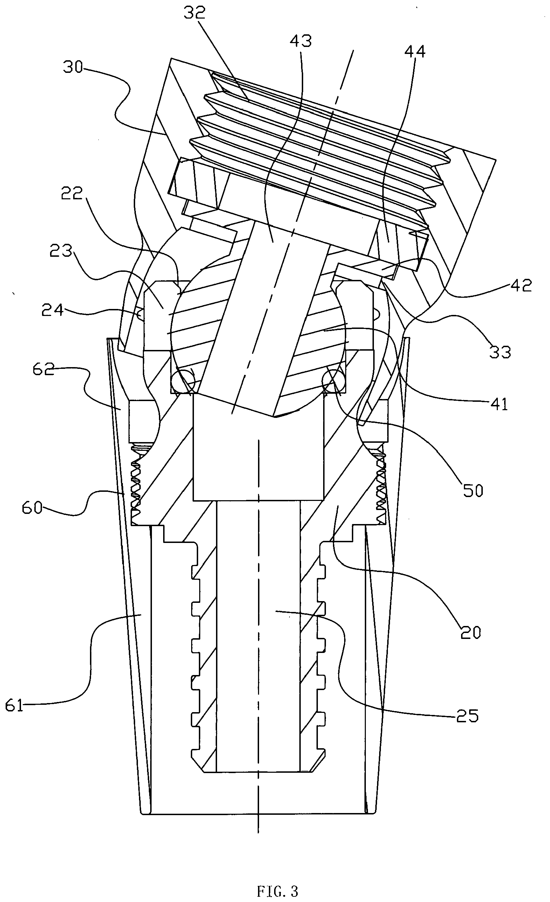

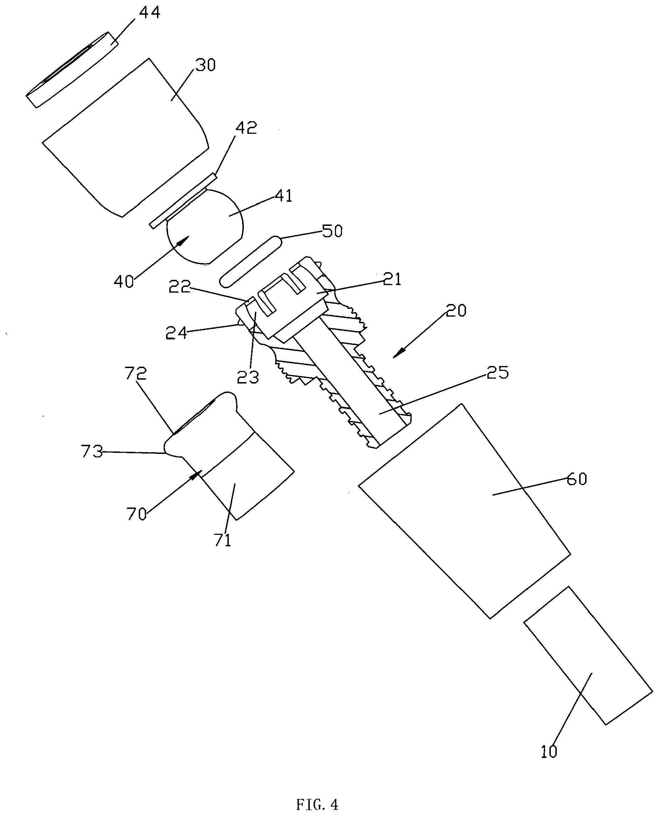

Referring to FIGs 1-4, a connecting mechanism, connecting a flexible pipe to an outlet device comprises a pipe fixing seat 20 fixedly connected to the flexible pipe 10, an outlet fixing seat 30 fixedly connected to the outlet device, a joint 40, a sealing ring 50, an outer sleeve 60 and an encasing sleeve 70, water in the flexible pipe is deflected to the outlet device by the pipe fixing seat 20 and the joint 40.

The outlet fixing seat 30 is disposed with an assembly through hole 32, the inner wall of the assembly through hole comprises a self-lock surface 31 and an internal thread surface, the inner wall of the assembly through hole is protruding with a protruding ring 33, which is disposed between the self-lock surface 31 and the internal thread surface. The self-lock surface 31 is a segment surface with its axis coincide with the axis of the internal thread surface with small opening and large belly, the internal thread surface is coupled to the outlet device, such as the external thread of a hand shower head, so that the hand shower head can be threaded to the internal thread surface of the outlet fixing seat 30.

The joint 40 is disposed with a ball joint 41 and a base 42 fixedly connected to the ball joint 41, the revolution axis of the ball joint 41 is perpendicular to the base 42, the internal diameter of the protruding ring 33 is larger than the external diameter of the ball joint and smaller than the largest spacing of the base 42, for example, if the section of the base is square, the internal diameter of the protruding ring is smaller than the length of side of the square base, so that the ball joint 41 can pass through the protruding ring 33 to insert to the space defined by the self-lock surface 31 from the thread surface towards the self-lock surface, the base 42 is then contacted with the end face of the protruding ring 33. The external thread of the outlet device is threaded to the internal thread surface of the outlet fixing seat 30 and abuts against the base 42, which is fixedly disposed between the outlet device and the protruding ring 33, so that the joint 40, the outlet fixing seat 30 and the outlet device are fixedly assembled, the joint 40 is fixedly connected to the outlet fixing seat 30 and the self-lock surface of the outlet fixing seat 30 surrounds the ball joint 41, preferred, a spacer 44 is disposed between the end face of the outlet device and the base to ensure the sealing. The joint 40 is disposed with a bore 43 passing through the joint 40 along the revolution axis of the ball joint 41 of the joint 40, the joint bore 43 is connected to the assembly hole 32 of the outlet fixing seat 30, and the joint bore 43 is connected to the outlet device after it is assembled to the outlet fixing seat 30. One end of the pipe fixing seat 20 is concaved with an assembly groove 21, the groove opening of which protrudes inwardly with an anti-off portion 22, the end of the pipe fixing seat 20 is disposed with cut slots to form suspending sheets 23 at the end portion of the pipe fixing seat 20 at the peripheral direction disposed with space with above mentioned anti-off portion 22, so that the suspending sheets 23 are elastically deformed by force, the ends of the suspending sheets surround and form the above mentioned groove opening, the ends of the suspending sheets protrude inwardly to form an upturned catch, which forms the above mentioned anti-off portion 22.

Putting the ball joint 41 straight at the assembly groove 21 and putting force to the both to make them move close, the ball joint 41 abuts against the upturned catch of the suspending sheets 23 to make the suspending sheets 23 elastically deformed outwardly, so that the ball joint 41 can be assembled into the assembly groove 21, then the suspending sheets 23 return to their nature state, with the anti-off portion 22, the ball joint 41 is connected to the pipe fixing seat 20 that they would not divide, the ball joint 41 and the pipe fixing seat 20 form a universal connection. After the assembling, the self-lock surface 31 further surrounds the end portion of the pipe fixing seat 20 to limit the deformation of the end portion of the pipe fixing seat 20, so that the end portion can be kept in its natural state or light deforming state like the suspending sheets, it avoids the ball joint falling off from the assembly groove, thus achieving anti-off and self-lock. In this embodiment, the protrusion in natural state or light deforming state and the self-lock surface have clearance therebetween, the diameter of the protrusion in off state is larger than the diameter of the self-lock surface. Preferred, the external periphery surface of the suspending sheets of the pipe fixing seat 20 is disposed with protrusion 24, which is a protrusion dot or a protrusion rib, the protrusions of all suspending sheets are arranged peripherally with space, with the cooperation of protrusions and the self-lock surface 31, it achieves anti-off and self-lock. In detail, the self-lock surface 31 abuts against the protrusions 24 when the connecting mechanism is in resting state. Preferred, during assembling the ball joint to the assembly groove, the largest external diameter of the end portion of the pipe fixing seat is coupled to that of the self-lock surface, so that the self-lock surface is coupled to the end portion of the pipe fixing seat 20 for anti-off and self-lock after the ball joint is assembled to the assembly groove.

The pipe fixing seat 20 is disposed with a fixing seat bore 25 connecting the flexible pipe 10 and the assembly groove 21, the other end face of the pipe fixing seat 20 is concaved with a through groove connected to the assembly groove 21, the through groove forms the fixing seat bore 25, the water in the flexible pipe 10 is deflected to the outlet device by the joint bore 43 and the fixing seat bore 25. The groove wall of the assembly groove 21 comprises a ball-shaped wall with the groove opening fitting to the ball joint 41 and a cylindrical wall connected to the ball-shaped wall, the groove bottom is disposed with an annular surface surrounding the fixing seat bore 25; the sealing ring 50 is provided between the outer wall of the ball joint 41, the cylindrical wall and the annular surface. The suspending sheets are configured on the ball-shaped wall.

The outer sleeve 60 is disposed with a thread portion, the outer sleeve 60 is threaded to the outer side of the pipe fixing seat 20 by the thread portion, the outer sleeve 60 has a first surrounding portion 61 and a second surrounding portion 62 respectively disposed at two sides of the thread portion. The end portion of the flexible pipe 10 is tightly sleeved on the outer side of the pipe fixing seat 20, the first surrounding portion 61 surrounds the end portion of the flexible pipe 10, an annular chamber is formed between the first surrounding portion 61 and the end portion of the flexible pipe 10, that it is benefit for the flexible pipe to reposition smoothly and it also avoids the dirt. The second surrounding portion 62 forms like a trumpet, which surrounds the external periphery surface of the end portion of the outlet fixing seat 30, the second surrounding portion 62 and the external periphery surface of the end portion of the outlet fixing seat 30 are arranged with space therebetween, the external periphery surface of the end portion of the outlet fixing seat 20 is a revolution surface, which has the external diameter gradually decreased from the head to the rear.

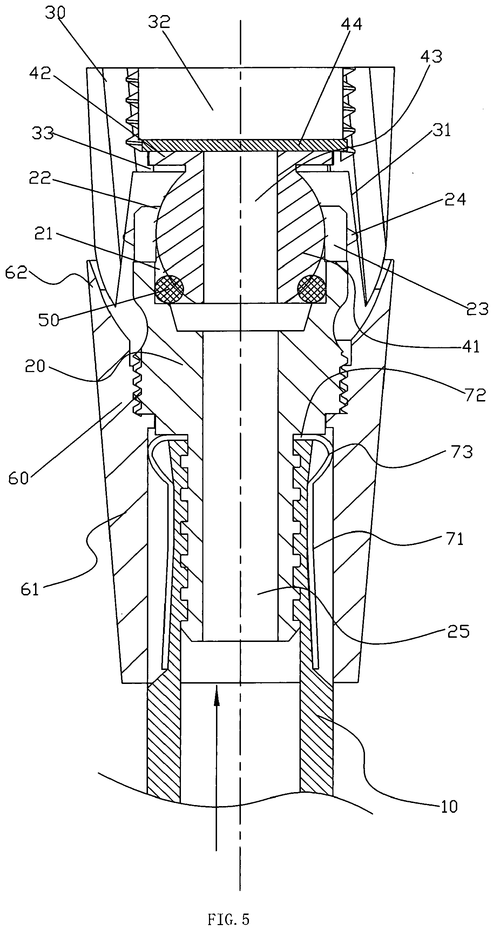

The encasing sleeve 70 is disposed between the flexible pipe 10 and the first surrounding portion 61 of the outer sleeve 60, it is located in the annular chamber to abut the flexible pipe 10, so that the end portion of the flexible pipe 10 is tightly sleeved on the outer side of the pipe fixing seat 20. The encasing sleeve 70 comprises an annular wall 71, an end face wall 72 and a connecting wall 73 extending from the annular wall 71 to the end face wall 72 connected to the external periphery edge of the end face wall 72, the connecting wall 73 forms a protruding shape. When assembling, the annular wall 71 is sleeved on the flexible pipe, the end face wall 72 abuts between the end face of the flexible pipe and the end face of the external protruding ring of the pipe fixing seat, the annular wall 71 and the end face wall 72 are positioned when assembling, with the limitation of the space distance of the annular chamber, the encasing sleeve 70 can produce a force to tightly sleeve on the flexible pipe, thus enhancing the connecting strength of the flexible pipe and the pipe fixing seat and the sealing performance therebetween. Referring to FIG.5, a second embodiment of the present invention differs from the first embodiment in that: the self-lock surface 21 is a conical surface with small inside and large outside.

## Claims

1. A connecting mechanism, connecting a flexible pipe (10) to an outlet device, comprising a pipe fixing seat (20) fixedly connected to a flexible pipe (10), an outlet fixing seat (30) fixedly connected to an outlet device and a joint (40), the joint (40) has a ball joint (41), water in the flexible pipe (10) is deflected to the outlet device by the pipe fixing seat (20) and the joint (40); wherein the joint (40) is fixedly connected to the outlet fixing seat (30) and the outlet fixing seat (30) is disposed with a self-lock surface (31) surrounding the ball joint (41); an end of the pipe fixing seat (20) is concaved with an assembly groove (21),
**characterised in that**:
the groove opening of the assembly groove (21) protrudes inwardly to form an anti-off portion (22), which connects the ball joint (41) and the pipe fixing seat (20), the ball joint (41) is assembled in the assembly groove (21) by the elastic deformation of the end portion of the pipe fixing seat (20), the ball joint (41) and the pipe fixing seat (20) form a universal connection; the self-lock surface (31) further surrounds the end portion of the pipe fixing seat (20) to limit the deformation of the end portion of the pipe fixing seat (20) so as to ensure the connection and prevent disconnection of the ball joint (41) and pipe fixing seat (20).

2. The connecting mechanism according to claim 1, wherein the end portion of the pipe fixing seat (20) is disposed with cut slots, so that the end portion of the pipe fixing seat (20) forms a plurality of suspending sheets (23) arranged in the periphery of said anti-off portion (22).

3. The connecting mechanism according to claim 1 and/or claim 2, wherein the self-lock surface (31) is a conical surface or a segment surface with a smaller diameter opening and a larger diameter inner concavity, the ball joint (41) is located in the chamber defined by the self-lock surface (31).

4. The connecting mechanism according to any one or more of the preceding claims, in particular according to claim 1 and/or claim 2, wherein the outlet fixing seat (30) is disposed with an assembly through hole (32), the inner wall of the assembly through hole (32) comprises the self-lock surface (31), the inner wall of the assembly through hole (32) is disposed with a protruding ring (33); the joint (40) comprises a base (42) fixedly connected to the ball joint (41), the base (42) is contacted with the end face of the protruding ring (33); the ball joint (41) passes through the protruding ring (33) and inserts into the chamber defined by the self-lock surface (31).

5. The connecting mechanism according to claim 4, wherein the outlet device is fixedly assembled in the assembly through hole (32) and the base (42) is fixedly disposed between the outlet device and the protruding ring (33).

6. The connecting mechanism according to any one or more of the preceding claims, in particular according to claim 1 and/or claim 2, wherein the end portion of the pipe fixing seat (20) has a protrusion (24) on the external periphery surface, the protrusion (24) and the self-lock surface (31) cooperate to achieve anti-off and self-lock.

7. The connecting device of according to any one or more of the preceding claims, in particular according to claim 1 and/or claim 2, wherein the joint (40) is disposed with a bore (43) passing through the joint (40), the pipe fixing seat (20) is disposed with a fixing seat bore (25) connected to the flexible pipe (10) and the assembly groove (21), water is deflected to the outlet device through the joint bore (43) and the fixing seat bore (25).

8. The connecting device according to any one or more of the preceding claims, in particular according to claim 1 and/or claim 2, wherein the groove wall of the assembly groove (21) comprises a ball-shaped wall with a groove opening fitting around the ball joint (41) and a cylindrical wall connected to the ball-shaped wall, the groove bottom of the assembly groove (21) is disposed with a fixing seat bore (25) connected to the flexible pipe (10) and the groove bottom is disposed with an annular surface surrounding the fixing seat bore (25); a sealing ring (50) is provided between the outer wall of the ball joint (41), the cylindrical wall and the annular surface.

9. The connecting mechanism according to any one or more of the preceding claims, in particular according to claim 1 and/or claim 2, wherein an outer sleeve (60) is further provided fixedly connected to the pipe fixing seat (20), the outer sleeve (60) surrounds the external periphery surface of the end portion of the outlet fixing seat (30), wherein the outer sleeve (60) and the external periphery surface of the end portion of the outlet fixing seat (30) are arranged with space therebetween.

10. The connecting mechanism according to claim 9, wherein an encasing sleeve (70) is further provided, the end portion of the flexible pipe (10) is tightly sleeved on the pipe fixing seat (20), the encasing sleeve (70) is disposed between the flexible pipe (10) and the outer sleeve (60) to abut against the flexible pipe (10) to make the end portion of the flexible pipe (10) tightly sleeved on the pipe fixing seat (20).

## Patentansprüche

1. Verbindungsmechanismus, der einen flexiblen Schlauch (10) mit einer Austrittsvorrichtung verbindet, der aufweist: einen Schlauchbefestigungssitz (20), der fest mit einem flexiblen Schlauch (10) verbunden ist, einen Austrittsbefestigungssitz (30), der fest auf einer Austrittsvorrichtung und einem Anschlussstück (40) angeschlossen ist, wobei das Anschlussstück (40) ein Kugelgelenk (41) hat, wobei Wasser in dem flexiblen Schlauch (10) durch den Schlauchbefestigungssitz (20) und das Anschlussstück (40) zu der Austrittsvorrichtung umgeleitet wird; wobei das Anschlussstück (40) fest mit dem Austrittsbefestigungssitz (30) verbunden ist und der Austrittsbefestigungssitz (30) mit einer selbstsperrenden Oberfläche (31) versehen ist, die das Kugelgelenk (41) umgibt; wobei ein Ende des Schlauchbefestigungssitzes (20) mit einer konkaven Montagenut (21) ausgebildet ist,
**dadurch gekennzeichnet, dass**:
die Nutöffnung der Montagenut (21) einwärts vorsteht, um einen Antilöseabschnitt (22) zu bilden, der das Kugelgelenk (41) und den Schlauchbefestigungssitz (20) verbindet, wobei das Kugelgelenk (41) durch die elastische Verformung des Endabschnitts des Schlauchbefestigungssitzes (20) in der Montagenut (21) montiert wird, wobei das Kugelgelenk (41) und der Schlauchbefestigungssitz (20) eine Universalverbindung bilden;
die selbstsperrende Oberfläche (31) ferner den Endabschnitt des Schlauchbefestigungssitzes (20) umgibt, um die Verformung des Endabschnitts des Schlauchbefestigungssitzes (20) zu begrenzen, um die Verbindung des Kugelgelenks (41) und des Schlauchbefestigungssitzes (20) sicherzustellen und die Trennung zu verhindern.

2. Verbindungsmechanismus nach Anspruch 1, wobei der Endabschnitt des Schlauchbefestigungssitzes (20) mit Kerbschlitzen versehen ist, so dass der Endabschnitt des Schlauchbefestigungssitzes (20) mehrere unterbrochene Platten (23) bildet, die in dem Umfang des Antilöseabschnitts (22) eingerichtet sind.

3. Verbindungsmechanismus nach Anspruch 1 und/oder Anspruch 2, wobei die selbstsperrende Oberfläche (31) eine konische Oberfläche oder eine Segmentoberfläche mit einer Öffnung mit kleinerem Durchmesser und einem inneren Hohlraum mit einem größeren Durchmesser ist, wobei das Kugelgelenk (41) in der Kammer angeordnet ist, die durch die selbstsperrende Oberfläche (31) definiert wird.

4. Verbindungsmechanismus nach einem oder mehreren der vorhergehenden Ansprüche, insbesondere nach Anspruch 1 und/oder Anspruch 2, wobei der Austrittsbefestigungssitz (30) mit einem Montagedurchgangsloch (32) versehen ist, wobei die Innenwand des Montagedurchgangslochs (32) die selbstsperrende Oberfläche (31) aufweist, wobei die Innenwand des Montagedurchgangslochs (32) mit einem vorstehenden Ring (33) versehen ist; wobei das Anschlussstück (40) eine fest mit dem Kugelgelenk (41) verbundene Basis (42) aufweist, wobei die Basis (42) mit der Endseite des vorstehenden Rings (33) in Kontakt ist; wobei das Kugelgelenk (41) durch den vorstehenden Ring (33) geht und in die Kammer eingesetzt ist, die durch die selbstsperrende Oberfläche (31) definiert wird.

5. Verbindungsmechanismus nach Anspruch 4, wobei die Austrittsvorrichtung fest in dem Montagedurchgangsloch (32) montiert ist und die Basis (42) fest zwischen der Austrittsvorrichtung und dem vorstehenden Ring (33) angeordnet ist.

6. Verbindungsmechanismus nach einem oder mehreren der vorhergehenden Ansprüche, insbesondere nach Anspruch 1 und/oder 2, wobei der Endabschnitt des Schlauchbefestigungssitzes (20) einen Vorsprung (24) auf der Außenumfangsoberfläche hat, wobei der Vorsprung (24) und die selbstsperrende Oberfläche (31) zusammenwirken, um das Antilösen und die Selbstsperrung zu erreichen.

7. Verbindungsvorrichtung nach einem oder mehreren der vorhergehenden Ansprüche, insbesondere nach Anspruch 1 und/oder Anspruch 2, wobei das Anschlussstück (40) mit einer Bohrung (43) versehen ist, die durch das Anschlussstück (40) geht, wobei der Schlauchbefestigungssitz (20) mit einer Befestigungssitzbohrung (25) versehen ist, die mit dem flexiblen Schlauch (10) und der Montagenut (21) verbunden ist, wobei Wasser durch die Anschlussstückbohrung (43) und die Befestigungssitzbohrung (25) umgeleitet wird.

8. Verbindungsvorrichtung nach einem oder mehreren der vorhergehenden Ansprüche, insbesondere nach Anspruch 1 und/oder 2, wobei die Nutwand der Montagenut (21) eine kugelförmige Wand mit einer Nutöffnung, die um das Kugelgelenk (41) passt, und eine zylindrische Wand, die mit der kugelförmigen Wand verbunden ist, aufweist, wobei der Nutboden der Montagenut (21) mit einer Befestigungssitzbohrung (25) versehen ist, die mit dem flexiblen Schlauch (10) verbunden ist, und der Nutboden mit einer ringförmigen Oberfläche versehen ist, die die Befestigungssitzbohrung (25) umgibt; wobei ein Dichtungsring (50) zwischen der Außenwand des Kugelgelenks (41), der zylindrischen Wand und der ringförmigen Oberfläche bereitgestellt ist.

9. Verbindungsmechanismus nach einem oder mehreren der vorhergehenden Ansprüche, insbesondere nach Anspruch 1 und/oder Anspruch 2, wobei ferner eine Außenhülse (60) fest mit dem Schlauchbefestigungssitz (20) verbunden bereitgestellt ist, wobei die Außenhülse (60) die Außenumfangsoberfläche des Endabschnitts des Austrittsbefestigungssitzes (30) umgibt, wobei die Außenhülse (60) und die Außenumfangsoberfläche des Endabschnitts des Austrittsbefestigungssitzes (30) mit einem Raum dazwischen eingerichtet sind.

10. Verbindungsmechanismus nach Anspruch 9, wobei ferner eine Mantelhülse (70) bereitgestellt ist, wobei der Endabschnitt des flexiblen Schlauchs (10) den Schlauchbefestigungssitz (20) fest umhüllt, wobei die Mantelhülse (70) zwischen dem flexiblen Schlauch (10) und der Außenhülse (60) angeordnet ist, so dass sie gegen den flexiblen Schlauch (10) anliegt, um den Schlauchbefestigungssitz (20) fest mit dem Endabschnitt des flexiblen Schlauchs (10) zu umhüllen.

## Revendications

1. Dispositif de raccordement reliant un tuyau souple (10) à un dispositif de sortie, comprenant une embase de fixation de tuyau (20) reliée de manière fixe à un tuyau souple (10), une embase de fixation de sortie (30) reliée de manière fixe à un dispositif de sortie, et un joint (40), le joint (40) comportant un joint sphérique (41), l'eau du tuyau souple (10) étant déviée vers le dispositif de sortie par l'embase de fixation de tuyau (20) et le joint (40) ; le joint (40) étant relié de manière fixe à l'embase de fixation de sortie (30) et ladite embase de fixation de sortie (30) étant pourvue d'une surface autobloquante (31) qui entoure le joint sphérique (41) ; une extrémité de l'embase de fixation de tuyau (20) étant rendue concave avec une rainure d'assemblage (21),
**caractérisé en ce que** l'ouverture de la rainure d'assemblage (21) dépasse vers l'intérieur afin de former une partie anti-desserrage (22) qui relie le joint sphérique (41) et l'embase de fixation de tuyau (20), le joint sphérique (41) est assemblé dans la rainure d'assemblage (21) grâce à la déformation élastique de la partie d'extrémité de l'embase de fixation de tuyau (20), le joint sphérique (41) et l'embase de fixation de tuyau (20) forment un raccordement universel ; la surface autobloquante (31) entoure également la partie d'extrémité de l'embase de fixation de tuyau (20) afin de limiter la déformation de ladite partie d'extrémité de l'embase de fixation de tuyau (20) de manière à garantir le raccordement et à empêcher la séparation du joint sphérique (41) et de l'embase de fixation de tuyau (20).

2. Mécanisme de raccordement selon la revendication 1, dans lequel la partie d'extrémité de l'embase de fixation de tuyau (20) est pourvue de fentes découpées, de sorte que ladite partie d'extrémité de l'embase de fixation de tuyau (20) forme plusieurs bandes de suspension (23) disposées sur la périphérie de la partie anti-desserrage (22) .

3. Mécanisme de raccordement selon la revendication 1 et/ou la revendication 2, dans lequel la surface autobloquante (31) est une surface conique ou une surface à segments avec une ouverture à plus petit diamètre et une concavité intérieure à plus grand diamètre, le joint sphérique (41) se trouvant dans la chambre définie par la surface autobloquante (31).

4. Mécanisme de raccordement selon l'une au moins des revendications précédentes, en particulier selon la revendication 1 et/ou la revendication 2, dans lequel l'embase de fixation de sortie (30) est pourvue d'un perçage traversant d'assemblage (32), la paroi du perçage traversant d'assemblage (32) comprend la surface autobloquante (31), la paroi intérieure du perçage traversant d'assemblage (32) est pourvue d'une bague saillante (33) ; le joint (40) comprend une base (42) reliée de manière fixe au joint sphérique (41), ladite base (42) est en contact avec la face d'extrémité de la bague saillante (33), le joint sphérique (41) passe à travers la bague saillante (33) et entre dans la chambre définie par la surface autobloquante (31).

5. Mécanisme de raccordement selon la revendication 4, dans lequel le dispositif de sortie est assemblé de manière fixe dans le perçage traversant d'assemblage (32), et la base (42) est disposée de manière fixe entre le dispositif de sortie et la bague saillante (33).

6. Mécanisme de raccordement selon l'une au moins des revendications précédentes, en particulier selon la revendication 1 et/ou la revendication 2, dans lequel la partie d'extrémité de l'embase de fixation de tuyau (20) présente une saillie (24) sur sa surface périphérique extérieure, la saillie (24) et la surface autobloquante (31) coopèrent pour réaliser un anti-desserrage et un autoblocage.

7. Mécanisme de raccordement selon l'une au moins des revendications précédentes, en particulier selon la revendication 1 et/ou la revendication 2, dans lequel le joint (40) est pourvu d'un perçage (43) qui le traverse, l'embase de fixation de tuyau (20) est pourvue d'un perçage d'embase de fixation (25) relié au tuyau souple (10) et à la rainure d'assemblage (21), l'eau est déviée vers le dispositif de sortie à travers le perçage de joint (43) et le perçage d'embase de fixation (25).

8. Mécanisme de raccordement selon l'une au moins des revendications précédentes, en particulier selon la revendication 1 et/ou la revendication 2, dans lequel la paroi de la rainure d'assemblage (21) comprend une paroi sphérique avec une ouverture de rainure ajustée autour du joint sphérique (41), et une paroi cylindrique reliée à ladite paroi sphérique, le fond de la rainure d'assemblage (21) est pourvu d'un perçage d'embase de fixation (25) qui est relié au tuyau souple (10), et le fond de la rainure est pourvu d'une surface annulaire qui entoure le perçage d'embase de fixation (25) ; une bague d'étanchéité (50) est disposée entre la paroi extérieure du joint sphérique (41), la paroi cylindrique et la surface annulaire.

9. Mécanisme de raccordement selon l'une au moins des revendications précédentes, en particulier selon la revendication 1 et/ou la revendication 2, dans lequel il est également prévu un manchon extérieur (60) qui est relié de manière fixe à l'embase de fixation de tuyau (20), et le manchon extérieur (60) entoure la surface périphérique extérieure de la partie d'extrémité de l'embase de fixation de sortie (30), le manchon extérieur (60) et la surface périphérique extérieure de la partie d'extrémité de l'embase de fixation de sortie (30) étant disposés avec un espace entre les deux.

10. Mécanisme de raccordement selon la revendication 9, dans lequel un manchon d'enrobage (70) est également prévu, la partie d'extrémité du tuyau flexible (10) est enfilée de manière serrée sur l'embase de fixation de tuyau (20), le manchon d'enrobage (70) est disposé entre le tuyau souple (10) et le manchon extérieur (60) pour buter contre ce dernier, afin que la partie d'extrémité du tuyau souple (10) soit enfilée de manière serrée sur l'embase de fixation de tuyau (20).
